# EUROPÄISCHE PATENTANMELDUNG

(11) **EP 3 435 295 A1**
(43) Veröffentlichungstag der Anmeldung: **30.01.2019**
(21) Anmeldenummer: 17183229.8
(22) Anmeldetag: 26.07.2017
(51) Int. Cl.: G06N 99/00

(54) **VORVERARBEITUNG FÜR EINEN KLASSIFIKATIONSALGORITHMUS**

(71) Anmelder: Siemens Aktiengesellschaft, 80333 München (DE)
(72) Erfinder: Engel, Thomas, 73432 Aalen (DE); Gigler, Alexander Michael, 86836 Untermeitingen (DE)

(57) **Zusammenfassung**

Der Erfindung liegt die Aufgabe zugrunde, Merkmale mittels Klassifikationsalgorithmen mit einer hohen Güte zu klassifizieren. Diese Aufgabe wird erfindungsgemäß durch das Anpassen eines Vorverarbeitungsalgorithmus, der vor dem Klassifikationsalgorithmus auf ein Merkmal abbildende Messdaten (201) angewendet wird, erreicht, wobei das Anpassen die Güte der Klassifikation berücksichtigt.

## Beschreibung

### TECHNISCHES GEBIET

Verschiedene Beispiele der Erfindung betreffen im Allgemeinen das Klassifizieren von mindestens einem Merkmal, welches durch einen Messdatensatz abgebildet wird. Verschiedene Beispiele der Erfindung betreffen insbesondere das Anwenden eines Vorverarbeitungsalgorithmus auf den Messdatensatz, bevor ein Klassifikationsalgorithmus auf den vorverarbeiteten Messdatensatz angewendet wird. Es werden Techniken beschrieben, um den Vorverarbeitungsalgorithmus anzupassen.

### HINTERGRUND

Künstliche Intelligenz ermöglicht es, Merkmale in Messdatensätzen zu erkennen. Beispielsweise kann eine entsprechende Klassifikation von Merkmalen im Zusammenhang mit ein oder mehreren der folgenden Anwendungen eingesetzt werden: Analyse von medizinischen Daten; Analyse von Betriebsdaten von Maschinen; Sprach-, Bild- oder Texterkennung; Analyse von Werkstücken und Materialien; etc.

In verschiedenen Szenarien im Zusammenhang mit der Klassifikation von Merkmalen kann es erstrebenswert sein, die Güte der Klassifikation zu optimieren. Es sind Techniken bekannt, um die Güte der Klassifikation durch Anwenden eines Vorverarbeitungsalgorithmus auf den entsprechenden Messdatensatz zu optimieren, siehe europäische Patentanmeldung 17 179 817.6.

Solche Techniken sind jedoch vergleichsweise statisch und oftmals kann es schwierig sein, den Vorverarbeitungsalgorithmus geeignet einzustellen.

### KURZE BESCHREIBUNG DER ERFINDUNG

Deshalb besteht ein Bedarf für verbesserte Techniken, um Merkmale mittels Klassifikationsalgorithmen zu klassifizieren. Insbesondere besteht ein Bedarf für solche Techniken, die zumindest einige der oben genannten Einschränkungen und Nachteile beheben.

Diese Aufgabe wird von den Merkmalen der unabhängigen Patentansprüche gelöst. Die Merkmale der abhängigen Patentansprüche definieren Ausführungsformen.

Ein Verfahren umfasst das Erhalten eines Messdatensatzes. Das Verfahren umfasst ferner das Anwenden eines Vorverarbeitungsalgorithmus auf den Messdatensatz. Derart wird ein vorverarbeiteter Messdatensatz erhalten. Das Verfahren umfasst auch das Anwenden eines Klassifikationsalgorithmus auf den vorverarbeiteten Messdatensatz. Dadurch wird mindestens ein Merkmal, welches durch den Messdatensatz und/oder den vorverarbeiteten Messdatensatz abgebildet wird, klassifiziert. Das Verfahren umfasst auch das Bestimmen einer Güte des Klassifizierens des mindestens einen Merkmals sowie das Anpassen des Vorverarbeitungsalgorithmus basierend auf der bestimmten Güte.

Der Messdatensatz kann beispielsweise einer Messreihe mit einer Vielzahl von Eingangsgrößen mit zugeordneten Messwerten entsprechen. Der Messdatensatz kann also eine Vielzahl von Datenpunkten aufweisen. Die Messdaten können ein oder mehrere physikalische Observablen abbilden, beispielsweise ein Absorptionsspektrum, ein Transmissionsspektrum, Entfernung, Vibration, Temperatur, Feuchtigkeit, Druck, Beschleunigung, Lautstärke, Schall-Spektrum, etc.

Es können unterschiedlichste Vorverarbeitungsalgorithmen angewendet werden. Insbesondere können solche Vorverarbeitungsalgorithmen angewendet werden, welche eine Menge von Datenpunkten des Messdatensatzes reduzieren, sodass der vorverarbeitete Messdatensatz eine geringere Menge von Datenpunkten aufweist. Es können auch solche Vorverarbeitungsalgorithmen angewendet werden, welche einen physikalisch-technischen Kontext des Messdatensatzes berücksichtigen, um derart eine hohe Genauigkeit im Zusammenhang mit dem Klassifizieren des mindestens einen Merkmals zu erzielen.

Insbesondere ist es möglich, dass der Vorverarbeitungsalgorithmus getrennt von dem Klassifikationsalgorithmus definiert ist. Beispielsweise wäre es also möglich, dass der Klassifikationsalgorithmus basierend auf Referenz-Messdatensätzen trainiert wird, wobei jedoch der Vorverarbeitungsalgorithmus nicht oder jedenfalls getrennt von dem Klassifikationsalgorithmus trainiert wird.

Z.B. könnte der Klassifikationsalgorithmus auch als datengetriebenes Modell bezeichnet werden, weil er typischerweise mit Messdaten und Zusatzinformationen zur exakten Klassifikation, die auch als ground truth bezeichnet wird, trainiert und gelernt wird. Der Klassifikationsalgorithmus könnte z.B. ein künstliches neuronales Netzwerk (KNN) umfassen, z.B. ein KNN mit ein oder mehreren Faltungsschichten (engl. convolutional neural network, CNN). Das KNN kann eine Eingangsschicht, eine Ausgangsschicht und ein oder mehrere versteckte Schichten aufweisen. Der Klassifikationsalgorithmus könnte auch eine lineare PLS-Regression (engl. partial least squares, PLS) umfassen. Es könnten auch herkömmliche Filter, z.B. ein Kalman-Filter verwendet werden. Im Allgemeinen kann ein lernender Klassifikationsalgorithmus verwendet werden. Der Klassifikationsalgorithmus könnte eine Support Vector Machine (SVM) und/oder ein Cluster-Verfahren und/oder einen Entscheidungsbaum und/oder eine PLS-Regression, insbesondere eine PLSDA-Regression, umfassen.

Die Güte des Klassifizierens kann hinsichtlich unterschiedlicher Kriterien definiert sein. Beispielsweise wäre es möglich, dass die Güte des Klassifizierens hinsichtlich einer Genauigkeit oder Zuverlässigkeit, mit der das mindestens eine Merkmal einer bestimmten Klasse zugeordnet werden kann, definiert ist. Dies bedeutet, dass die Güte des Klassifizierens dann besonders groß sein kann, wenn eine Unsicherheit, mit der das Merkmal erkannt und klassifiziert wird, gering ist. Alternativ oder zusätzlich könnte die Güte des Klassifizierens zum Beispiel auch in Bezug auf eine zum Klassifizieren benötigte Zeitdauer bzw. zum Klassifizieren benötigte Rechen-Ressourcen definiert sein. Werden beispielsweise viele Rechen-Ressourcen benötigt, so könnte die Güte des Klassifizierens vergleichsweise gering sein. Die Güte könnte auch so definiert sein, wie gut die Klassifizierung abhängig von der Menge der verwendeten Eingangsdatensätze mit zugehöriger ground truth funktioniert.

Beispielsweise könnte die Anpassung des Vorverarbeitungsalgorithmus bedeuten, dass eine bestimmte durch den Vorverarbeitungsalgorithmus definierte Operation, mit der der Messdatensatz modifiziert wird, geändert wird; z.B. könnte eine geeignete Operation aus einer Menge von Kandidaten-Operationen ausgewählt werden. Beispiele für solche Operationen, die durch den Vorverarbeitungsalgorithmus auf den Messdatensatz angewendet werden, umfassen: Skalierung; Binning; Differenzierung; und Integration. Weitere Beispiele für die Vorverarbeitungsalgorithmus umfassen: Bilden von Zahlentupeln mit vorbestimmter Beziehung aus dem Datendatensatz, beispielsweise durch einen Poincare-Schnitt. Dabei können unterschiedliche vorbestimmte Beziehungen berücksichtigt sein. Z.B. könnten die vorbestimmten Beziehungen einen Zusammenhang mit dem physikalisch-technischen Kontexts des Messdatensatzes aufweisen, also z.B. eine zeitliche, räumliche, energetische, frequenzmäßige oder auch wellenlängenmäßige Beziehung umfassen.

Alternativ oder zusätzlich könnte die Anpassung des Vorverarbeitungsalgorithmus bedeuten, dass der Wert mindestens eines Parameters des Vorverarbeitungsalgorithmus verändert wird; dies bedeutet, dass zum Beispiel die Stärke oder eine sonstige Randbedingung einer entsprechenden Operation, mit der der Messdatensatz modifiziert wird, geändert wird.

Mittels der obenstehend beschriebenen Techniken wird also eine Rückkopplung erreicht, die auf Grundlage der Güte des Klassifizierens eine Anpassung des Vorverarbeitungsalgorithmus bewirkt. Durch eine solche Rückkopplung kann der Vorverarbeitungsalgorithmus geeignet angepasst werden, um beispielsweise die Güte zu maximieren bzw. im Allgemeinen extremal zu gestalten. Insbesondere kann es mittels der hierin beschriebenen Techniken möglich sein, bei großen Parameterräumen - d. h. wenn eine große Anzahl von Anpassungen des Vorverarbeitungsalgorithmus möglich sind - zuverlässig die geeignete Anpassung aufzufinden.

Durch das Vorsehen des Vorverarbeitungsalgorithmus und des Klassifikationsalgorithmus kann eine Entkopplung von Vorverarbeitung und Klassifikation erreicht werden. Das kann dazu verwendet werden, um in der Vorverarbeitung Einflüsse der jeweiligen Messanordnung - d. h. des entsprechenden physikalisch-technischen Kontexts - zu kompensieren oder zu reduzieren. Damit könnte z. B. ein medizinisch zugelassener Klassifizierungsalgorithmus sicher angewendet, etwa im Zusammenhang mit einer Binnung-Operation oder Umskalierungs-Operation des Vorverarbeitungsalgorithmus.

In manchen Beispielen wäre es möglich, dass ein physikalischtechnischer Kontext des Messdatensatzes bestimmt wird. Dann kann eine vom Vorverarbeitungsalgorithmus verwendete Operation aus einer Vielzahl von Kandidaten-Operationen basierend auf dem bestimmten physikalisch-technischen Kontext ausgewählt werden.

Dies bedeutet, dass a-priori ein oder mehrere geeignete Operationen des Vorverarbeitungsalgorithmus aus der Menge der Kandidaten-Operationen ausgewählt werden können und anschlie-βend ein - möglicherweise iteratives - Anpassen dieser ausgewählten Vorverarbeitungsalgorithmen auf Grundlage dieser Auswahl erfolgt. Der physikalisch-technische Kontext kann also gewissermaßen den Ausgangspunkt einer - möglicherweise iterativen - Anpassung des Vorverarbeitungsalgorithmus definieren.

Dies basiert auf der Erkenntnis, dass in manchen Fällen bestimmte Operationen aufgrund der Natur der Datenpunkte der Messdatensätze besonders geeignet sein können, um die Güte des Klassifizierens zu maximieren. Beispielsweise könnten je nach durch den Messdatensatz abgebildeter physikalischen Observablen bestimmte Nachbarschaftsbeziehungen zwischen den Datenpunkten existieren; durch das geeignete Auswählen der Operationen könnte beispielsweise sichergestellt werden, dass diese Nachbarschaftsbeziehungen durch das Anwenden des derart definierten Vorverarbeitungsalgorithmus nicht unterdrückt oder gelöscht werden.

Zum Ermitteln des physikalisch-technischen Kontexts können unterschiedliche Techniken eingesetzt werden. Z.B. könnte auf Steuerdaten, die mit dem Messdatensatz assoziiert sind, zurückgegriffen werden; diese Steuerdaten könnten den physikalisch-technischen Kontext explizit beschreiben. Manchmal könnte der physikalisch-technische Kontext aber nicht unmittelbar verfügbar sein. In einem solchen Fall könnte ein zweiter Klassifikationsalgorithmus auf den Messdatensatz angewendet werden, um den physikalisch-technischen Kontext des Messdatensatzes zu bestimmen. Dieser zweite Klassifikationsalgorithmus kann getrennt von dem Klassifikationsalgorithmus zum Klassifizieren des mindestens einen Merkmals definiert sein; der zweite Klassifikationsalgorithmus dient nämlich nicht zum Klassifizieren des mindestens einen Merkmals, sondern vielmehr zum Klassifizieren des physikalisch technischen Kontexts, der z.B. abstrakt von konkreten Merkmalen festgelegt sein kann. Durch den zweiten Klassifikationsalgorithmus kann besonders zuverlässig der geeignete Vorverarbeitungsalgorithmus aufgefunden werden, auch wenn beispielsweise keine Steuerdaten vorhanden sind, die den physikalisch-technischen Kontext des Messdatensatzes explizit beschreiben.

Es ist möglich, dass die Rückkopplung iterativ in einer Schleife ausgeführt wird. Beispielsweise wäre es also möglich, dass das Anwenden des Vorverarbeitungsalgorithmus, das Anwenden des Klassifikationsalgorithmus, das Bestimmen der Güte sowie das Anpassen des Vorverarbeitungsalgorithmus in einer iterativen Schleife über mehrere Iterationen wiederholt wird.

Indem mehrere Iterationen der Schleife durchgeführt werden, kann es besonders einfach möglich sein, zum Beispiel die Güte des Klassifizierens zu maximieren oder im Allgemeinen extremal zu gestalten. Insbesondere müssen keine geschlossenen Modelle zur Anpassung des Vorverarbeitungsalgorithmus angewendet werden, sondern ein besonders geeigneter Vorverarbeitungsalgorithmus kann durch iterative Anpassung nach und nach aufgefunden werden. Eine solche numerische Implementierung kann besonders robust und flexibel einsetzbar sein.

Dabei ist es möglich, dass der oder die Klassifikationsalgorithmen beim Durchführen der Schleife nicht oder nicht signifikant angepasst werden. Das heißt, dass ein fixer Klassifikationsalgorithmus verwendet werden kann, während der Vorverarbeitungsalgorithmus angepasst wird. Beispielsweise wäre es möglich, dass der Klassifikationsalgorithmus getrennt trainiert wurde, z.B. auf Grundlage eines oder mehrerer Referenz-Messdatensätze, die denselben oder einen vergleichbaren physikalisch-technischen Kontext aufweisen, wie der Messdatensatz.

Dabei könnte die iterative Schleife ein Abbruchkriterium aufweisen, welches optional aus folgender Gruppe ausgewählt ist: Anzahl der Iterationen; Änderung der Güte des Klassifizierens zwischen zwei Iterationen; und Absolutwert Güte des Klassifizierens.

Derart kann sichergestellt werden, dass eine geeignete Anzahl von Iterationen der Schleife durchgeführt wird; beispielsweise unter Abwägung der insgesamt benötigten Zeitdauer einerseits und der Zuverlässigkeit, mit der die Güte maximiert werden kann, andererseits.

Das Anpassen des Vorverarbeitungsalgorithmus kann beispielsweise das Anwenden eines Auswahlalgorithmus umfassen. Dieser Auswahlalgorithmus kann die Veränderung eines Werts mindestens eines Parameters des Vorverarbeitungsalgorithmus in Abhängigkeit der bestimmten Güte beschreiben. Dies bedeutet, dass der Auswahlalgorithmus als Ergebnis die Stärke der Veränderung des Werts des mindestens einen Parameters des Vorverarbeitungsalgorithmus bereitstellen kann. Dies bedeutet, dass die Veränderung des Werts korrelieren kann mit der bestimmten Güte. Dadurch kann die Güte besonders effizient maximiert werden.

Es wäre zum Beispiel möglich, dass der Auswahlalgorithmus eine Optimierung der Güte durch Veränderung des mindestens einen Parameters über mehrere Iterationen der Schleife umfasst. Es sind geeignete Optimierungen bekannt, die es ermöglichen, den Parameterraum effizient und zielgerichtet zu durchlaufen, um derart zügig eine Maximierung der Güte zu erzielen.

Zum Beispiel könnte der Auswahlalgorithmus die Veränderung des Werts des mindestens einen Parameters in Abhängigkeit von mindestens einem der folgenden Elemente bestimmen: dem physikalisch-technischen Kontext des Messdatensatzes; einem Klassifizierungsergebnis des Klassifikationsalgorithmus; sowie der Güte.

Dies bedeutet, dass für unterschiedliche Typen von Messdatensätzen beispielsweise unterschiedliche Variationen des Werts des mindestens einen Parameters des Vorverarbeitungsalgorithmus verwendet werden könnten. Entsprechend könnten für unterschiedliche identifizierte Merkmale unterschiedliche Variationen des Werts des mindestens einen Parameters des Vorverarbeitungsalgorithmus verwendet werden. Derart kann die Güte besonders maßgeschneidert maximiert werden. Dies kann es ermöglichen, den geeigneten Vorverarbeitungsalgorithmus besonders zügig aufzufinden.

In den verschiedenen hierin beschriebenen Beispielen könnten unterschiedliche Techniken verwendet werden, um die Güte zu bestimmen. Eine beispielhafte Technik umfasst das Verwenden mehrerer unterschiedlicher Klassifikationsalgorithmen. Z.B. könnten unterschiedliche KNNs verwendet werden, d.h. unterschiedlich angelernte KNNs oder auch KNNs mit unterschiedlichen Schichten. Es könnten aber auch z.B. ein oder mehrere KNNs mit einer SVM kombiniert werden, etc.

Das Verfahren könnte also beispielsweise weiterhin das Anwenden mindestens eines weiteren Klassifikationsalgorithmus auf den vorverarbeiteten Messdatensatz zum Klassifizieren des mindestens einen Merkmals umfassen. Dabei kann der mindestens eine weitere Klassifikationsalgorithmus verschieden von dem Klassifikationsalgorithmus sein. Das Verfahren kann auch das Vergleichen eines Klassifikationsergebnisses des mindestens einen weiteren Klassifikationsalgorithmus mit einem Klassifikationsergebnisse des Klassifikationsalgorithmus umfassen. Die Güte kann dann basierend auf dem Vergleichen bestimmt werden.

Zum Beispiel könnte derart berücksichtigt werden, ob eine große Streuung der Klassifikationsergebnisse vorliegt; was zum Beispiel ein Indiz für eine geringe Güte sein kann. Derart kann die Güte besonders zuverlässig bestimmt werden.

Das Vergleichen könnte dabei unterschiedliche Gewichte für das Klassifikationsergebnis des mindestens einen weiteren Klassifikationsalgorithmus und für das Klassifikationsergebnis des Klassifikationsalgorithmus berücksichtigen. Dies bedeutet, dass im Zusammenhang mit dem Vergleichen die Klassifikationsergebnisse unterschiedlicher Klassifikationsalgorithmen unterschiedlich stark berücksichtigt werden können. Beispielsweise könnten die Gewichte basierend auf a-priori Wissen über die Geeignetheit eines bestimmten Klassifikationsalgorithmus für die Klassifikationen Zusammenhang mit dem bestimmten physikalischen-technischen Kontext des Messdatensatzes ausgewählt werden.

Derart kann berücksichtigt werden, dass manche Klassifikationsalgorithmen besser zur Klassifikation des mindestens einen Merkmals geeignet sind, als andere. Dadurch kann die Güte besonders genau bestimmt werden.

Eine Vorrichtung umfasst eine Rechnereinheit und einen Speicher. Die Rechnereinheit ist eingerichtet, um Programm-Code aus dem Speicher zu laden und auszuführen, sowie um basierend auf dem ausgeführten Programm-Code ein Verfahren auszuführen. Das Verfahren umfasst das Erhalten eines Messdatensatzes und das Anwenden eines Vorverarbeitungsalgorithmus auf den Messdatensatz. Derart wird ein vorverarbeiteter Messdatensatz erhalten. Das Verfahren umfasst auch das Anwenden eines Klassifikationsalgorithmus auf den vorverarbeiteten Messdatensatz zum Klassifizieren von mindestens einem Merkmal, das durch den Messdatensatz abgebildet wird. Das Verfahren umfasst auch das Bestimmen einer Güte des Klassifizierens des mindestens einen Merkmals und das Anpassen des Vorverarbeitungsalgorithmus basierend auf der bestimmten Güte.

Ein Computerprogrammprodukt umfasst Programm-Code, der von mindestens einem Prozessor ausgeführt werden kann. Das Ausführen des Programm-Codes bewirkt, dass der Prozessor ein Verfahren ausführt. Das Verfahren umfasst das Erhalten eines Messdatensatzes. Das Verfahren umfasst ferner das Anwenden eines Vorverarbeitungsalgorithmus auf den Messdatensatz. Derart wird ein vorverarbeiteter Messdatensatz erhalten. Das Verfahren umfasst auch das Anwenden eines Klassifikationsalgorithmus auf den vorverarbeiteten Messdatensatz. Dadurch wird mindestens ein Merkmal, welches durch den Messdatensatz abgebildet wird, klassifiziert. Das Verfahren umfasst auch das Bestimmen einer Güte des Klassifizierens des mindestens einen Merkmals sowie das Anpassen des Vorverarbeitungsalgorithmus basierend auf der bestimmten Güte.

Ein Computerprogramm umfasst Programm-Code, der von mindestens einem Prozessor ausgeführt werden kann. Das Ausführen des Programm-Codes bewirkt, dass der Prozessor ein Verfahren ausführt. Das Verfahren umfasst das Erhalten eines Messdatensatzes. Das Verfahren umfasst ferner das Anwenden eines Vorverarbeitungsalgorithmus auf den Messdatensatz. Derart wird ein vorverarbeiteter Messdatensatz erhalten. Das Verfahren umfasst auch das Anwenden eines Klassifikationsalgorithmus auf den vorverarbeiteten Messdatensatz. Dadurch wird mindestens ein Merkmal, welches durch den Messdatensatz abgebildet wird, klassifiziert. Das Verfahren umfasst auch das Bestimmen einer Güte des Klassifizierens des mindestens einen Merkmals sowie das Anpassen des Vorverarbeitungsalgorithmus basierend auf der bestimmten Güte.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

### KURZE BESCHREIBUNG DER FIGUREN

- FIG. 1: illustriert schematisch eine Vorrichtung gemäß verschiedener Beispiele.
- FIG. 2: ist ein Flussdiagramm eines beispielhaften Verfahrens.
- FIG. 3: illustriert schematisch einen Messdatensatz gemäß verschiedener Beispiele.
- FIG. 4: illustriert schematisch einen vorverarbeiteten Messdatensatz gemäß verschiedener Beispiele.
- FIG. 5: illustriert schematisch das Anpassen eines Vorverarbeitungsalgorithmus gemäß verschiedener Beispiele.

### DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken beschrieben, um ein oder mehrere Merkmale, die durch einen Messdatensatz abgebildet werden, zu klassifizieren. Dazu können den verschiedenen hierin beschriebenen Beispielen ein oder mehrere Klassifikationsalgorithmen angewendet werden. Die hierin beschriebenen Techniken sind dabei nicht auf einen spezifischen Klassifikationsalgorithmus beschränkt; vielmehr können in den verschiedenen Beispielen unterschiedlichste Typen von Klassifikationsalgorithmen eingesetzt werden. Beispielsweise könnte ein KNN oder ein CNN oder eine SVM oder eine PLS-Regression oder eine PLSDA-Regression eingesetzt werden.

Verschiedene hierin beschriebene Beispiele beruhen auf der Erkenntnis, dass es oftmals erstrebenswert sein kann, den Messdatensatz durch Anwenden eines Vorverarbeitungsalgorithmus zum Erhalten eines vorverarbeiteten Messdatensatzes zu verarbeiten, bevor die entsprechenden Daten dem Klassifikationsalgorithmus zugeführt werden. Dabei kann durch das Anwenden des Vorverarbeitungsalgorithmus - je nach Vorverarbeitungsalgorithmus und/oder je nach Messdatensatz - unterschiedliche Effekte erzielt werden. Beispielsweise wäre es möglich, dass durch Anwenden des Vorverarbeitungsalgorithmus ein vorverarbeiteter Messdatensatz erhalten wird, der eine reduzierte Datenmenge aufweist; dadurch könnte es möglich sein, dass das Anwenden des Klassifikationsalgorithmus besonders schnell bzw. mit vergleichsweise geringer Auslastung von Rechner-Ressourcen durchgeführt werden kann. In einem weiteren Beispiel wäre es alternativ oder zusätzlich möglich, dass durch Anwenden des Vorverarbeitungsalgorithmus ein vorverarbeiteter Messdatensatz erhalten wird, der eine veränderte Datenstruktur aufweist, die eine besonders zuverlässige oder genaue Klassifikation von Merkmalen in dem entsprechenden vorverarbeiteten Messdatensatz ermöglicht.

Nachfolgend soll dieser Befund anhand eines illustrativen Beispiels beschrieben werden. Zum Beispiel werden spektroskopische Verfahren in vielen Bereichen der Chemie, Lebensmittelchemie oder Biochemie, sowie Biologie und Medizin eingesetzt, zur Bestimmung bzw. Klassifikation von Stoffen und/oder Systemzuständen. Solche spektroskopische Verfahren beruhen typischerweise darauf, dass erfasste optische Spektren als charakteristischer Fingerabdruck der atomaren/chemischen/molekularen Zusammensetzung der untersuchten Probe zur Analyse eingesetzt werden. Um ein aufgezeichnetes Spektrum zur Klassifikation nutzen zu können, kann es oftmals erforderlich sein, a-priori Wissen über die typischen Eigenschaften der zu unterscheidenden Klassen bereitzustellen - d.h. a-priori Wissen betreffend den physikalisch-technischen Kontext des entsprechenden Messdatensatzes. So werden beispielsweise oftmals Peaks des Signals in vordefinierten Bereichen des Spektrums analysiert, um den Wasser-oder Sauerstoffgehalt zu analysieren und damit auffällige Testproben zu isolieren. Sollen jedoch Substanzen untersucht werden, deren atomare/molekulare/biochemische Eigenschaften nicht oder nur teilweise bekannt sind, können solche Techniken typischerweise nicht eingesetzt werden.

Ein Beispiel hierfür ist die Klassifikation von Tumorzellen mittels optischen Spektren im nahen Infrarotbereich. In einem solchen Szenario könnten als Klassifikationsalgorithmen zum Beispiel lernende Techniken wie beispielsweise KNNs oder eine lineare Regression, etwa eine PLS-Regression verwendet werden. Dabei werden die Spektren als hochdimensionalen Vektoren der Größe (1*n) aufgefasst, die entsprechend der aufgelösten Wellenlängen eine große Anzahl von Einzel-Merkmalen enthalten. Bei einer solchen Interpretation der Spektren gehen jedoch oftmals Informationen verloren, da Spektraldaten eine eindimensionale Abfolge von Werten mit einer physikalisch begründeten Ordnung darstellen. Dies bedeutet, dass auch Nachbarschaftsbeziehungen zwischen einzelnen energetischen Kanälen des Spektrums eine aussagekräftige Information hinsichtlich der Klassifikation beinhalten. Dabei werden bei(?) vielen Referenzimplementierungen die in den unterschiedlichen Kanälen gemessenen Werte jedoch ohne Berücksichtigung solcher Nachbarschaftsbeziehungen durch den Klassifikationsalgorithmus analysiert. Mittels geeigneter Klassifikationsalgorithmen - beispielsweise mittels eines KNNs - können aber auch solche Nachbarschaftsbeziehungen berücksichtigt werden.

Insbesondere in solchen Szenarien bei welchen Nachbarschaftsbeziehungen berücksichtigt werden, kann es erstrebenswert sein, einen Vorverarbeitungsalgorithmus auf den entsprechenden Messdatensatz zum Erhalten eines vorverarbeiteten Messdatensatzes anzuwenden. Dabei sollte der Vorverarbeitungsalgorithmus solche Nachbarschaftsbeziehungen jedoch insoweit berücksichtigen, dass diese durch die Vorverarbeitung nicht unterdrückt oder anderweitig verfälscht werden.

Dabei sind unterschiedliche Vorverarbeitungsalgorithmen denkbar. Beispielsweise könnte der Vorverarbeitungsalgorithmus zumindest eine der folgenden Operationen auf den Messdatensatz anwenden: Skalierung; Binning; Differenzierung; und Integration. Auch ein Poincare-Schnitt wäre denkbar. Im Allgemeinen wäre es zum Beispiel möglich, dass durch den Vorverarbeitungsalgorithmus die Datenmenge des vorverarbeiteten Messdatensatzes gegenüber der Datenmenge des Messdatensatzes verändert wird; beispielsweise könnte insbesondere die Datenmenge des Messdatensatzes reduziert werden. Durch eine Reduktion der Datenmenge des vorverarbeiteten Messdatensatzes kann typischerweise das Anwenden des Klassifikationsalgorithmus beschleunigt werden bzw. die benötigten Rechen-Ressourcen reduziert werden.

Gemäß einer Binning-Technik wird die Anzahl von Datenpunkten des Messdatensatzes festgelegt, welche im Zusammenhang mit Messwert-Abschnitten zu einem kombinierten Datenpunkt des vorverarbeiteten Messdatensatzes zusammengefasst werden. Die Messwert-Abschnitte können als Funktion der Position im Messdatensatz variieren. Darüber hinaus kann ggf. auch der Offset der einzelnen Messwert-Abschnitte im Rahmen des Binnings geeignet festgelegt werden.

Zum Beispiel könnten ein oder mehrere konjugierte Datenpunkte des Messdatensatzes in einem einzelnen Datenpunkt oder einen Zahlentupel des vorverarbeiteten Messdatensatzes zusammengefasst werden. Konjugierte Datenpunkte können beispielsweise in einem Messdatensatz mit optischen Spektren vorliegen, wenn man zu Datenpunkten mit geringer Energie die zumeist ganzzahligen Vielfachen der Ausgangsenergie als spektrale Obertöne zuordnet, also beispielsweise den Datenpunkt von 0,5 eV mit denen von 1 eV, 1,5 eV und 2 eV in einem Zahlentupel kombiniert.

Alternativ und ergänzend kann dies beispielsweise bedeuten, dass redundante Datenpunkte des Messdatensatzes in einem Datenpunkte des vorverarbeiteten Messdatensatzes zusammengefasst werden. Beispielsweise könnten redundante Datenpunkte dann vorliegen, wenn eine physikalisch-technische Auflösung eines zum Erfassen des Messdatensatzes verwendeten Messprinzips geringer ist, als die Auflösung der Datenstruktur des Messdatensatzes.

Daraus ist ersichtlich, dass grundsätzlich eine große Vielfalt von Techniken im Zusammenhang mit dem Vorverarbeitungsalgorithmus eingesetzt werden können. Deshalb wird hierin beschrieben, wie ein oder mehrere geeignete Operationen und/oder Werte eines Parameters für den Vorverarbeitungsalgorithmus bestimmt werden können. Derart können besonders gute Ergebnisse im Zusammenhang mit dem Anwenden des Klassifikationsalgorithmus ermöglicht werden - also beispielsweise eine hohe Genauigkeit beim Klassifizieren des mindestens einen Merkmals und/oder eine signifikante Reduktion der benötigten Rechen-Ressourcen und/oder eine signifikante Reduzierung des Anzahl benötigter Messdatensätze und ground truth Daten zum Anlernen des Klassifizierungsalgorithmus.

Mittels der hierin beschriebenen Techniken kann es also möglich sein, den Vorverarbeitungsalgorithmus zu verbessern. Dies erfolgt in manchen Beispielen durch Anpassen des Vorverarbeitungsalgorithmus basierend auf einer Güte des Klassifizierens von einem oder mehreren Merkmalen. Insbesondere kann dabei in manchen Beispielen eine Rückkopplungsschleife verwendet werden, wobei die Güte des Klassifizierens des mindestens einen Merkmals mittels des Klassifikationsalgorithmus im Rahmen der Rückkopplungsschleife berücksichtigt werden kann. Die Rückkopplungsschleife kann über mehrere Iterationen wiederholt werden, bis ein Abbruchkriterium erfüllt ist.

Zum Beispiel könnte die Güte des Klassifizierens eine Genauigkeit oder Zuverlässigkeit, mit der das mindestens eine Merkmal klassifiziert wird, beschreiben. Alternativ oder zusätzlich könnte die Güte des Klassifizierens auch eine Zeitdauer bzw. die benötigten Rechen-Ressourcen, die für das klassifizieren benötigt werden, beschreiben.

Beispielsweise könnte - wenn eine hohe Güte des Klassifizierens festgestellt wird - keine oder nur eine geringe Anpassung eines Werts von mindestens einem Parameter des Vorverarbeitungsalgorithmus erfolgen; wird jedoch eine vergleichsweise geringe Güte des Klassifizierens festgestellt, so kann eine vergleichsweise stärkere Anpassung des Werts von mindestens einem Parameter des Vorverarbeitungsalgorithmus erfolgen, oder sogar der Wechsel der verwendeten Operation des Vorverarbeitungsalgorithmus. Dann könnte beispielsweise der Einfluss einer solchen Veränderung auf die Güte des Klassifizierens berücksichtigt werden.

Dabei können in den verschiedenen hierin beschriebenen Beispielen unterschiedliche Techniken verwendet werden, um die Güte des Klassifizierens zu bestimmen. Beispielsweise könnte die Güte basierend auf einem Anteil der Merkmale des Messdatensatzes, die keiner durch den Klassifikationsalgorithmus definierten Klasse zuzuordnen sind, bestimmt werden. Alternativ oder zusätzlich könnte die Güte auf Grundlage eines Konfidenzniveaus von Klassifikationsergebnissen des Klassifikationsalgorithmus bestimmt werden: beispielsweise sind Klassifikationsalgorithmen bekannt, die neben dem Ergebnis der Klassifikation auch eine Zuverlässigkeit der Klassifikation bereitstellen. Dabei kann eine hohe Zuverlässigkeit einer hohen Güte entsprechen - und andersherum. In einem weiteren Beispiel könnte - alternativ oder zusätzlich zu den voranstehend beschriebenen Techniken - ein Vergleich zwischen den Klassifikationsergebnissen einer Vielzahl von unterschiedlichen Klassifikationsalgorithmen beim Bestimmen der Güte berücksichtigt werden. Dabei könnte zum Beispiel eine hohe Streuung der Klassifikationsergebnisse eine geringe Güte bedeuten - und andersherum. Ein solcher Vergleich könnte insbesondere gewichtet erfolgen, d. h. es könnten für unterschiedliche Klassifikationsergebnisse, die mit unterschiedlichen Klassifikationsalgorithmen assoziiert sind, unterschiedliche Gewichte berücksichtigt werden. Derart könnte berücksichtigt werden, dass manche Klassifikationsalgorithmen besser oder schlechter geeignet sind, um bestimmte Merkmale zu klassifizieren.

Grundsätzlich können die hierin beschriebenen Techniken beispielsweise in einer Kalibrations-Phase eingesetzt werden. So wäre es zum Beispiel möglich, auf Grundlage von Referenz-Messdatensätzen die Werte von Parametern verschiedener Vorverarbeitungsalgorithmen anzupassen und/oder geeignete Operationen auszuwählen. Beim bestimmungsgemäßen Gebrauch auf Grundlage von a-priori unbekannten Messdatensätzen kann dann bereits ein Regelsatz vorhanden sein, um in Abhängigkeit des jeweiligen Messdatensatzes den geeigneten kalibrierten Vorverarbeitungsalgorithmus auszuwählen.

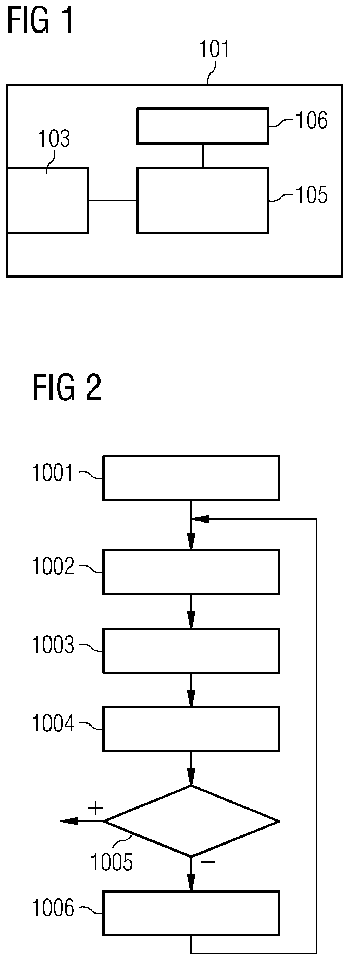

FIG. 1 illustriert Aspekte in Bezug auf eine Vorrichtung 101, die für die verschiedenen hierin beschriebenen Techniken eingesetzt werden kann. Die Vorrichtung 101 umfasst eine Schnittstelle 103. Über die Schnittstelle 103 können Messdatensätzen erhalten werden, beispielsweise von einem geeigneten Messgerät. Die Vorrichtung 101 umfasst auch einen Prozessor 105, sowie einen Speicher 106. Beispielsweise könnte Programm-Code in dem Speicher 106 abgespeichert sein und von dem Prozessor 105 aus dem Speicher 106 geladen werden. Der Prozessor 105 könnte dann den Programm-Code ausführen. Das Ausführen des Programms-Codes kann bewirken, dass der Prozessor 105 Techniken durchführt, wie sie hierin beschrieben sind, beispielsweise im Zusammenhang mit: dem Anwenden eines Vorverarbeitungsalgorithmus auf den Messdatensatz; dem Anwenden eines Klassifikationsalgorithmus auf einen vorverarbeiteten Messdatensatz zum Klassifizieren von mindestens einem Merkmal; dem Bestimmen einer Güte des Klassifizierens; und dem Anpassen des Werts von einem oder mehreren Parametern des Vorverarbeitungsalgorithmus.

FIG. 2 ist ein Flussdiagramm eines beispielhaften Verfahrens. Zum Beispiel könnte das Verfahren von dem Prozessor 105 der Vorrichtung 101 ausgeführt werden. Mittels des Verfahrens aus FIG. 2 kann die Güte, mit der ein oder mehrere Merkmale eines Messdatensatzes durch einen Klassifikationsalgorithmus klassifiziert werden können, verbessert werden. Dabei können unterschiedliche Klassifikationsalgorithmen eingesetzt werden, beispielsweise KNNs oder CNNs oder deep learning oder SVM, etc.

Zunächst wird in Block 1001 ein Messdatensatz erhalten. Zum Beispiel könnte der Messdatensatz mittels eines geeigneten Messgeräts erfasst werden. Dabei können unterschiedliche Messdatensätzen berücksichtigt werden, beispielsweise Spektroskopie-Daten, Bilddaten eines bildgebenden medizinischen Verfahrens, zum Beispiel Computertomografie-Messdaten oder Magnetresonanz-Messdaten oder Ultraschall-Messdaten, Materialprüfung-Messdaten (zum Beispiel über Röntgen-Inspektion oder Oberflächenanalyse erhalten), etc.

Dann erfolgt in Block 1002 das Anwenden eines Vorverarbeitungsalgorithmus auf den Messdatensatz aus Block 1001.

Dabei wird ein bestimmter Wert für einen Parameter des Vorverarbeitungsalgorithmus verwendet. Beispielsweise könnte bei der ersten Iteration von Block 1002 ein vordefinierter Standard-Wert für den Parameter verwendet werden.

Außerdem wird mindestens eine bestimmte, durch den Vorverarbeitungsalgorithmus festgelegte Operation verwendet, z.B. eine Standard-Operation.

Dabei können, wie obenstehend beschrieben, unterschiedlichste Vorverarbeitungsalgorithmen eingesetzt werden. Zum Beispiel wäre es in manchen Beispielen möglich, einen physikalisch-technischen Kontext des Messdatensatzes zu bestimmen und dann die Operation des Vorverarbeitungsalgorithmus aus einer Vielzahl von Kandidaten-Operationen basierend auf den bestimmten physikalisch-technischen Kontext auszuwählen.

Zum Beispiel könnte der physikalisch-technische Kontext eine durch den Messdatensatz abgebildete physikalische Observablen, ein Messprinzip, eine Messauflösung, eine Anzahl von Datenpunkten, eine Messdauer, etc. beschreiben. Der physikalisch-technische Kontext kann also Meta-Information in Bezug auf den Messdatensatz beinhalten.

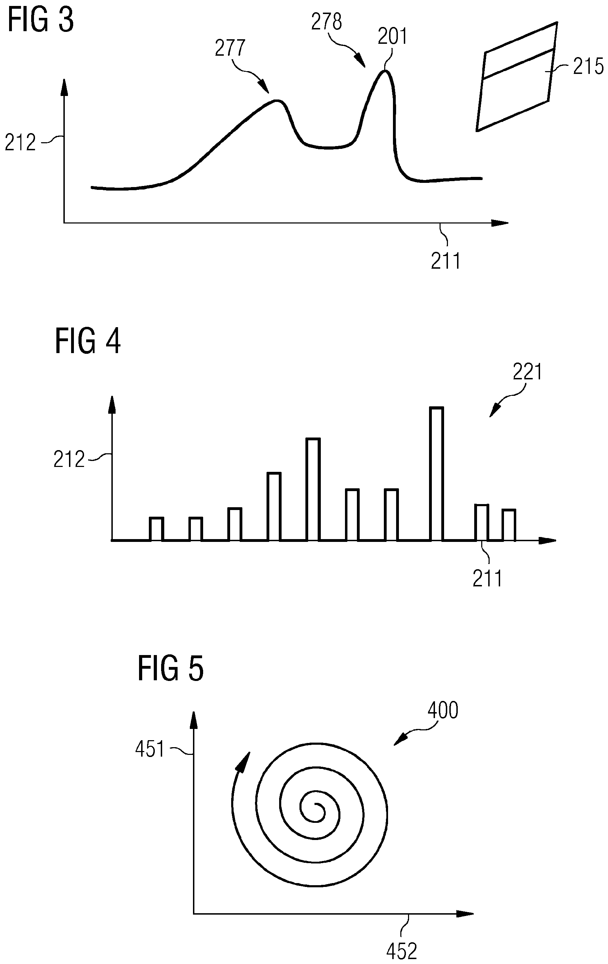

Bezugnehmend auf FIG. 3 und FIG. 4: dort sind Aspekte in Bezug auf das Anwenden des Vorverarbeitungsalgorithmus in Block 1002 dargestellt. FIG. 3 illustriert beispielsweise einen Messdatensatz 201: dabei werden Datenpunkte an bestimmten Positionen 211 mit bestimmten Werten 212 durch den Messdatensatz 201 beschrieben. Es sind zwei Merkmale 277, 278 in Form von lokalen Peaks abgebildet.

Außerdem ist der Messdatensatz 201 auch mit Steuerdaten 215 assoziiert. Beispielsweise könnten die Steuerdaten 215 den physikalisch-technischen Kontext des Messdatensatzes beschreiben. Zum Beispiel könnten die Steuerdaten 215 Informationen in Bezug auf das verwendete Messgerät, die beobachtete physikalische Observablen, die Messdauer, die Messauflösung, den Messbereich, etc. beschreiben. Es ist nicht in allen Beispielen erforderlich, dass die Steuerdaten 215 vorhanden sind.

In FIG. 4 sind anschließend die vorverarbeiteten Messdaten 221 dargestellt, wie sie durch Anwenden des Vorverarbeitungsalgorithmus auf die Messdaten 201 erhalten werden. In dem Beispiel der FIG. 4 ist der Vorverarbeitungsalgorithmus mit einer Binning-Technik assoziiert: dies bedeutet, dass benachbarte Datenpunkte der Messdaten gemäß einem entsprechenden Sammel-Parameter des Vorverarbeitungsalgorithmus zusammengefasst werden, in einen gemittelten Wert. Solche zusammengefassten Datenpunkte können auch als konjugierte Datenpunkte bezeichnet werden. Durch das Binning weist der vorverarbeitete Messdatensatz 221 eine gegenüber dem Messdatensatz 201 reduzierte Datenmenge auf.

Die Größe des vorverarbeiten Messdatensatzes ist dann ungefähr um einen Faktor geringer, der zahlenmäßig einem Sammel-Parameter des Binnings entspricht. Ferner ist es dann möglich, zu einem festen Sammel-Parameter mehrere substanziell unterschiedliche vorverarbeitete Messdatensätze zu erzeugen, die sich darin unterscheiden, ausgehend von welchem initialen Datenpunkt des Messdatensatzes bis zum Wert des SammelParameters mit dem Zusammenfassen benachbarter Datenpunkte begonnen wird. Dies bedeutet, dass unterschiedliche vorverarbeitete Messdatensätze zwar die gleiche reduzierte Größe gegenüber dem Messdatensatz aufweisen können, jedoch unterschiedliche benachbarte Datenpunkte zusammengefasst werden. Diese Art der Zusammenfassung der Datenpunkte kann durch einen weiteren Parameter beschrieben werden, der den Startwert festlegt. Auf diese Art reduziert sich die Größe den Datenmenge eines der vorverarbeiteten Messdatensätze um einen Faktor, der durch den festen Sammel-Parameter festgelegt ist; trotzdem es ist möglich, eine Anzahl unterschiedlicher vorverarbeiteter Messdatensätze zu erzeugen, z.B. in unterschiedlichen Iterationen von 1002. Dies geschieht durch Variation des durch den Startwert festgelegten initialen Datenpunkts des Messdatensatzes, ausgehend von welchem jeweils gemäß dem Sammel-Parameter gesammelt wird. Deshalb ist die Anzahl der unterschiedlichen vorverarbeiteten Messdatensätze gleich der Größe des Sammelparameters minus eins. Diese unterschiedlichen vorverarbeiteten Messdatensätze können dann dem bzw. den Klassifizierungsalgorithmen zugeführt werden.

In einem Beispiel könnte derart auch die Datenmenge des vorverarbeiteten Messdatensatzes gegenüber der Datenmenge des Messdatensatzes erhöht werden. So wäre es möglich, die unterschiedlichen vorverarbeiteten Messdatensätze mit aufsteigendem Startwert für den ersten Datenpunkt zur Anwendung der Binning-Operation mit dem Sammel-Parameter zeilenweise in ein Array anzuordnen. Damit könnte die weitere Verarbeitung zur Bestimmung optimierter Parameter des Vorverarbeitungsalgorithmus neben den Techniken der Auswertung für Datenreihen auch mit Techniken der Bildverarbeitung erfolgen. Allgemein kann also die Dimension des vorverarbeiteten Messdatensatzes gegenüber dem Messdatensatz auch erhöht werden, was neue Möglichkeiten für die Auswertung erlaubt. Die beschriebene Anordnung in das Array stellt auch wieder eine geordnete Zuordnung der Daten dar, so dass Nachbarschaftsbeziehungen nicht verloren gehen. Da es sich dabei um eine Darstellungsform handelt, kann diese Zuordnung prinzipiell auch anderweitig sichergestellt werden, wie z.B. beim Aufbau von Zahlentupeln, etc.

Neben einer solchen Binning-Operation können auch ein oder mehrere andere Operationen alternativ oder zusätzlich durch den Vorverarbeitungsalgorithmus beschrieben werden, z.B. Skalierung, Differenzierung und Integration.

Wieder Bezug nehmend auf FIG. 2: Anschließend erfolgt in Block 1003 das Anwenden eines Klassifikationsalgorithmus auf den vorverarbeiteten Messdatensatz 221. Der Klassifikationsalgorithmus kann zum Beispiel ein KNN, also zum Beispiel ein CNN, umfassen. Durch das Anwenden des Klassifikationsalgorithmus wird mindestens ein Merkmal, welches durch den Messdatensatz bzw. durch den vorverarbeiteten Messdatensatz abgebildet wird, klassifiziert. Das Klassifizieren des mindestens einen Merkmals kann bedeuten, dass das mindestens eine Merkmal 277, 278 erkannt wird (beispielsweise mit einer zugeordneten Position 211) und das mindestens eine Merkmal einer bestimmten Klassifikationsgruppe zugeordnet wird. Beispielsweise könnte im Zusammenhang mit der oben stehend diskutierten Anwendung betreffend die Auswertung von Spektroskopie-Messdaten erkannt werden, ob die durch die Messdaten abgebildete Probe bestimmte Stoffe beinhaltet; unterschiedliche Stoffe können unterschiedliche charakteristische Fingerabdrücke in den Spektroskopie-Messdaten bewirken, die als Merkmale erkannt werden können.

Anschließend erfolgt in Block 1004 das Bestimmen einer Güte des Klassifizierens des mindestens einen Merkmals. Dies kann zum Beispiel bedeuten, dass bestimmt wird, wie genau oder zuverlässig oder schnell das mindestens eine Merkmal durch das Anwenden des Klassifikationsalgorithmus in Block 1003 erkannt wurde.

Dabei können unterschiedliche Techniken verwendet werden, um die Güte zu bestimmen. In einem Beispiel wäre es möglich, die Güte auf Grundlage eines Konfidenzniveaus der Klassifikation aus Block 1003 zu bestimmen. In weiteren Beispielen wäre es möglich, einen Vergleich des Klassifikationsergebnisses mehrerer Klassifikationsalgorithmen beim Bestimmen der Güte zu berücksichtigen: In manchen Beispielen wäre es möglich, dass in Block 1003 nicht nur ein einzelner Klassifikationsalgorithmus angewendet wird, sondern vielmehr eine Vielzahl von verschiedenen Klassifikationsalgorithmen. Beispielsweise könnten unterschiedliche KNNs angewendet werden, d. h. zum Beispiel unterschiedlich trainierte KNNs. Dann könnte es möglich sein, dass das mindestens eine Merkmal durch die verschiedenen Klassifikationsalgorithmen erkannt wird. Durch einen Vergleich der Klassifikationsergebnisse kann dann die Güte bestimmt werden.

Beispielsweise könnten die Klassifikationsergebnisse gewichtet miteinander verglichen werden, sodass ein erster Klassifikationsalgorithmus im Zusammenhang mit dem Bestimmen der Güte stärker berücksichtigt wird, als ein zweiter Klassifikationsalgorithmus. Dabei könnte eine solche Gewichtung aufgrund von Eigenschaften des entsprechenden Klassifikationsergebnisses bestimmt werden; beispielsweise könnte die Gewichtung in Abhängigkeit des physikalisch-technischen Kontexts des Messdatensatzes vorgegeben sein.

In Block 1005 wird dann überprüft, ob ein Abbruch-Kriterium erfüllt ist. Beispielsweise könnte überprüft werden, ob die in Block 1004 bestimmte Güte - z.B. ein Absolutwert der Güte - einen bestimmten Schwellenwert überschreitet. Alternativ oder zusätzlich könnte auch eine Anzahl von Iterationen des Blocks 1004 berücksichtigt werden oder eine Veränderung der Güte zwischen zwei Iterationen von Block 1004.

Wenn das Abbruchkriterium in Block 1005 erfüllt ist, dann kann der gefundene Wert des Parameters des Vorverarbeitungsalgorithmus und/oder die gefundenen ein oder mehreren Operationen aus der letzten Iteration von Block 1002 gespeichert und zukünftig verwendet werden; dazu kann z.B. eine Zuordnung zum physikalisch-technischen Kontext zusammen mit der Konfiguration des Vorverarbeitungsalgorithmus gespeichert werden. Beispielsweise könnte dann die Kalibrations-Phase abgeschlossen werden. Optional könnte die Auswertung und Klassifizierung weiterer Messdatensätze aus weiteren Messungen erfolgen (in FIG. 2 nicht dargestellt).

Andernfalls wird der Wert des Parameters des Vorverarbeitungsalgorithmus und/oder die Operation(en) in Block 1006 angepasst und eine erneute Iteration der Blöcke 1002 - 1005 ausgeführt. Daraus ist ersichtlich, dass das Anwenden des Vorverarbeitungsalgorithmus in Block 1002, dass Anwenden des Klassifikationsalgorithmus in Block 1003, das Bestimmen der Güte in Block 1004 sowie das Anpassen des Vorverarbeitungsalgorithmus in Block 1006 in einer iterativen Schleife wiederholt wird.

In den verschiedenen hierin beschriebenen Beispielen könnte auch der Wert von mehr als einem Parameter des Vorverarbeitungsalgorithmus angepasst werden. Es könnten auch ein oder mehrere mit dem Vorverarbeitungsalgorithmus assoziierte Operationen angepasst oder ausgetauscht werden.

Es sind unterschiedlichste Techniken denkbar, um den Wert des Parameters des Vorverarbeitungsalgorithmus in Block 1006 anzupassen. Beispielsweise könnte auf eine vordefinierte Liste mit einer vorbestimmten Reihenfolge mit möglichen Kandidaten-Werten des Parameters des Vorverarbeitungsalgorithmus bestehen, die im Rahmen der durch die Blöcke 1002 - 1006 ausgebildeten iterativen Schleife in dieser Reihenfolge abgearbeitet wird. In anderen Beispielen könnte der Wert des Parameters auch zufällig oder quasi-zufällig verändert werden.

Im Allgemeinen könnte das Anpassen des Werts des mindestens einen Parameters des Vorverarbeitungsalgorithmus das Anwenden eines Auswahlalgorithmus umfassen. Der Auswahlalgorithmus könnte die Veränderung des Werts in Abhängigkeit der aktuellen Güte aus der jeweiligen Iteration von Block 1004 beschreiben. Beispielsweise könnte eine größere Veränderung des Werts durchgeführt werden, wenn die aktuelle Güte vergleichsweise gering ist. Beispielsweise könnte eine größere Veränderung des Werts durchgeführt werden, wenn eine Veränderung der Güte zwischen den zwei vorangegangenen Iterationen von Block 1004 vergleichsweise gering ist.

Zum Beispiel könnte der Auswahlalgorithmus eine Optimierung der Güte durch Variation des Werts des mindestens einen Parameters über mehrere Iterationen der Schleife umfassen. Es sind unterschiedlichste Optimierungen bekannt, beispielsweise das Gauß-Newton-Verfahren, das Gradientenverfahren, genetische Algorithmen, etc.. Solche Optimierungen ermöglichen es, den verfügbaren Raum der Werte des Parameters effizient zu durchlaufen, sodass ein Wert des Parameters, der einem Maximum der Güte entspricht, zügig aufgefunden werden kann. Dabei kann die Optimierung insbesondere die Anpassung des Werts zwischen zwei Iterationen der Schleife in Block 1006 beschreiben. Die Optimierung kann also den Auswahlalgorithmus festlegen.

Zum Beispiel könnte im Rahmen der Optimierung überprüft werden, ob sich die Güte zwischen zwei aufeinanderfolgenden Iterationen der Schleife signifikant verändert hat. Hat sich die Güte nicht signifikant verändert, so könnte beispielsweise die zuletzt durchgeführte Anpassung des Werts in der vorangehenden Iteration von Block 1006 rückgängig gemacht werden bzw. wieder entfallen. Der zugehörige Wert des Parameters könnte als nicht geeignet markiert werden.

Aus dem Beispiel der FIG. 2 ist ersichtlich, dass der Wert des Parameters des Vorverarbeitungsalgorithmus selbstlernend über eine Rückkopplung aus dem Klassifizierungsergebnis aufgefunden werden kann, zum Beispiel mithilfe einer Optimierung.

Solche Techniken können variiert und erweitert werden. Zum Beispiel könnte in verschiedenen Beispielen nicht nur der Wert eines einzelnen Parameters des Vorverarbeitungsalgorithmus bestimmt werden, sondern es wäre möglich, die Werte einer Vielzahl von Parametern des Vorverarbeitungsalgorithmus zu bestimmen. Das ist z.B. im Zusammenhang mit FIG. 5 illustriert, wo der Wert der Parameter 451 und 452 durch spiralförmiges Abtasten des entsprechenden Parameterraums 400 verändert wird. Ferner wäre es in manchen Beispielen auch möglich, über die Variation des Werts eines Parameters eines gegebenen Vorverarbeitungsalgorithmus hinaus auch die vom Vorverarbeitungsalgorithmus verwendete Operation anzupassen. Zum Beispiel könnte durch Anpassen des Vorverarbeitungsalgorithmus die Art der Vorverarbeitung des Messdatensatzes angepasst werden. Beispielsweise wäre es möglich, in unterschiedlichen Iterationen der Schleife aus Blöcken 1002 - 1006 umzuschalten zwischen unterschiedlichen durch den Vorverarbeitungsalgorithmus definierten Operationen, d. h. zum Beispiel zwischen: Skalierung; Binning; Differenzierung; und Integration. Die Stärke der Reduktion der Menge von Datenpunkten zwischen vorverarbeiteten Messdatensatz und initiale Messdatensatz könnte für verschiedene Iterationen durch geeignete Dimensionierung des entsprechenden Parameters angepasst werden.

In weiteren Beispielen könnten die im Zusammenhang mit FIG. 2 beschriebenen Techniken auch mit einem selbstlernenden (weiteren) Klassifikationsalgorithmus kombiniert werden; dieser Klassifikationsalgorithmus könnte auf den Messdatensatz angewendet werden, und dann auf Grundlage des entsprechenden Klassifikationsergebnisses der geeignete Vorverarbeitungsalgorithmus ausgewählt werden. Beispielsweise könnte also aus einer Liste der möglichen Datenvor- und/oder Datenaufbereitungen mit einem adaptiven bzw. selbstlernenden KNN ausgewählt werden.

Zusammenfassend wurden voranstehend Techniken beschrieben, die es ermöglichen, einen verwendeten Vorverarbeitungsalgorithmus zu optimieren. Beispielsweise könnte die im Zusammenhang mit dem Klassifizieren zu berücksichtigende Datenmenge durch Optimierung des Vorverarbeitungsalgorithmus minimiert werden. Über die optimierte Datenmenge kann auch der Rechenaufwand bzw. die Rechenzeit minimiert werden. Dadurch kann eine schnellere Klassifikation von Merkmalen mittels eines Klassifikationsalgorithmus erreicht werden. Die Optimierung des Vorverarbeitungsalgorithmus kann auch eine Genauigkeit des Klassifikationsalgorithmus betreffen; dadurch kann eine besonders genaue Klassifikation erreicht werden. Im Allgemeinen ist also die Güte der Klassifikation von Merkmalen in Abhängigkeit des verwendeten Vorverarbeitungsalgorithmus messbar.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Zur Illustration wurden beispielsweise voranstehend verschiedene Techniken beschrieben, bei denen der Vorverarbeitungsalgorithmus eine Reduktion der Datenmenge des vorverarbeiteten Messdatensatzes gegenüber dem Messdatensatz bewirkt. In anderen Beispielen wäre es aber auch möglich, dass die Datenmenge des vorverarbeiteten Messdatensatzes gegenüber dem Messdatensatz erhöht wird, z.B. durch eine Binning-Operation bei der unterschiedliche Startwerte für das Sammeln von benachbarten Datenpunkten berücksichtigt werden.

## Patentansprüche

1. Verfahren, das umfasst:
- Erhalten eines Messdatensatzes (201),
- Anwenden eines Vorverarbeitungsalgorithmus auf den Messdatensatz (201) zum Erhalten eines vorverarbeiteten Messdatensatzes (221),
- Anwenden eines Klassifikationsalgorithmus auf den vorverarbeiteten Messdatensatz (221) zum Klassifizieren von mindestens einem Merkmal (277, 278), das durch den Messdatensatz (201) abgebildet wird,
- Bestimmen einer Güte des Klassifizierens des mindestens einen Merkmals, und
- Anpassen des Vorverarbeitungsalgorithmus basierend auf der bestimmten Güte.

2. Verfahren nach Anspruch 1, das weiterhin umfasst:
- Bestimmen eines physikalisch-technischen Kontexts des Messdatensatzes (201), und
- Auswählen einer vom Vorverarbeitungsalgorithmus verwendeten Operation aus einer Vielzahl von Kandidaten-Operationen basierend auf dem bestimmten physikalisch-technischen Kontext des Messdatensatzes (201).

3. Verfahren nach Anspruch 2, das weiterhin umfasst:
- Anwenden eines weiteren Klassifikationsalgorithmus auf den Messdatensatz (201), um den physikalisch-technischen Kontext des Messdatensatzes (201) zu bestimmen.

4. Verfahren nach einem der voranstehendenden Ansprüche, wobei das Anwenden des Vorverarbeitungsalgorithmus, das Anwenden des Klassifikationsalgorithmus, das Bestimmen der Güte und das Anpassen des Vorverarbeitungsalgorithmus in einer iterativen Schleife über mehrere Iterationen wiederholt wird.

5. Verfahren nach Anspruch 4,
wobei die iterative Schleife ein Abbruchkriterium aufweist, welches optional aus folgender Gruppe ausgewählt ist:
Anzahl der Iteration;
Änderung der Güte des Klassifizierens zwischen zwei Iteration;
und Absolutwert der Güte des Klassifizierens.

6. Verfahren nach einem der voranstehenden Ansprüche,
wobei das Anpassen des Vorverarbeitungsalgorithmus das Anwenden eines Auswahlalgorithmus umfasst,
wobei der Auswahlalgorithmus die Veränderung eines Werts (451, 452) mindestens eines Parameters des Vorverarbeitungsalgorithmus in Abhängigkeit der bestimmten Güte beschreibt.

7. Verfahren nach Anspruch 6, sowie nach Anspruch 4 oder 5, wobei der Auswahlalgorithmus eine Optimierung der Güte durch Veränderung des Werts (451, 452) des mindestens einen Parameters über mehrere Iterationen der Schleife umfasst.

8. Verfahren nach Anspruch 6 oder 7,
wobei der Auswahlalgorithmus die Veränderung des Werts (451, 452) des mindestens einen Parameters in Abhängigkeit von mindestens einem der folgenden Elemente bestimmt:
einem physikalisch-technischen Kontext des Messdatensatzes (201);
einem Klassifizierungsergebnisses des Klassifikationsalgorithmus;
der Güte.

9. Verfahren nach einem der voranstehenden Ansprüche, das weiterhin umfasst:
- Anwenden mindestens eines weiteren Klassifikationsalgorithmus auf den vorverarbeiteten Messdatensatz (221) zum Klassifizieren des mindestens einen Merkmals, wobei der mindestens eine weitere Klassifikationsalgorithmus verschieden von dem Klassifikationsalgorithmus ist, und
- Vergleichen eines Klassifikationsergebnisses des mindestens einen weiteren Klassifikationsalgorithmus mit einem Klassifikationsergebnis des Klassifikationsalgorithmus,
wobei die Güte basierend auf dem Vergleichen bestimmt wird.

10. Verfahren nach Anspruch 9,
wobei das Vergleichen unterschiedliche Gewichte für das Klassifikationsergebnis des mindestens einen weiteren Klassifikationsalgorithmus und für das Klassifikationsergebnis des Klassifikationsalgorithmus berücksichtigt.

11. Verfahren nach einem der voranstehenden Ansprüche,
wobei der Vorverarbeitungsalgorithmus zumindest eine der folgenden Operationen auf den Messdatensatz (201) anwendet:
Skalierung;
Binning;
Differenzierung;
und Integration.

12. Verfahren nach einem der voranstehenden Ansprüche,
wobei der Vorverarbeitungsalgorithmus eine Veränderung der Datenmenge des vorverarbeiteten Messdatensatzes (221) gegenüber dem Messdatensatz (201) bewirkt.

13. Verfahren nach einem der voranstehenden Ansprüche, das weiterhin umfasst:
- Trainieren des Klassifikationsalgorithmus basierend auf Referenz-Messdatensätzen,
wobei der Vorverarbeitungsalgorithmus nicht oder getrennt von dem Klassifikationsalgorithmus trainiert wird.

14. Vorrichtung (101), die umfasst:
- eine Recheneinheit (105),
- einen Speicher (106),
wobei die Recheneinheit (105) eingerichtet ist, um Programm-Code aus dem Speicher zu laden und auszuführen, um ein Verfahren auszuführen, welches umfasst:
- Erhalten eines Messdatensatzes (201),
- Anwenden eines Vorverarbeitungsalgorithmus auf den Messdatensatz zum Erhalten eines vorverarbeiteten Messdatensatzes (221),
- Anwenden eines Klassifikationsalgorithmus auf den vorverarbeiteten Messdatensatz (221) zum Klassifizieren von mindestens einem Merkmal (277, 278), das durch den Messdatensatz (221) abgebildet wird,
- Bestimmen einer Güte des Klassifizierens des mindestens einen Merkmals, und
- Anpassen des Vorverarbeitungsalgorithmus basierend auf der bestimmten Güte.

15. Vorrichtung nach Anspruch 14,
wobei das Verfahren ein Verfahren nach einem der Ansprüche 1 - 13 umfasst.
